# FASCICULE DE BREVET EUROPEEN

(11) **EP 3 429 790 B1**
(45) Date de publication et mention de la délivrance du brevet: **10.01.2024**
(21) Numéro de dépôt: 17714864.0
(22) Date de dépôt: 15.03.2017
(51) Int. Cl.: B23D 57/00

(54) **PROCEDE ET DISPOSITIF DE DECOUPE D'UNE PLAQUE OU D'UN PANNEAU DE MATERIAU DE CONSTRUCTION POREUX**
VERFAHREN UND VORRICHTUNG ZUM SCHNEIDEN EINER PLATTE ODER EINES PANEELS AUS PORÖSEM BAUMATERIAL
METHOD AND DEVICE FOR CUTTING A PLATE OR A PANEL OF POROUS CONSTRUCTION MATERIAL

(30) Priorité: 15.03.2016 FR 1652198
(43) Date de publication de la demande: 23.01.2019
(73) Titulaire: SAINT-GOBAIN PLACO, 92400 Courbevoie (FR)
(72) Inventeur: DOUCHE, Jean-Pierre, 60150 Le Plessis Brion (FR)
(74) Mandataire: Saint-Gobain Recherche
(86) Numéro de dépôt international: PCT/FR2017/050591
(87) Numéro de publication internationale: WO 2017/158290

(56) Documents cités:
- EP-A1- 2 529 888
- WO-A1-2008/015895
- FR-A1- 2 640 906
- US-A- 4 016 856
- US-A- 4 484 502
- US-A1- 2015 266 117

## Description

L'invention concerne un dispositif et un procédé de découpe d'une plaque ou d'un panneau de matériau de construction poreux. Cette plaque ou ce panneau peut être en tous matériaux de construction poreux, par exemple à base de fibres comme de la laine minérale ou de la laine de matériaux biosourcés ou une laine comprenant différents types de fibres. Le panneau peut également être un panneau pressé de fibres minérales ou encore un panneau à base de matériaux biosourcés, comme le bois ou d'autres fibres naturelles, ou à base de fibres polymères, ou à base d'un mélange de différents types de fibres, etc.

Ces matériaux de construction poreux peuvent être produits par des procédés en ligne où l'on prépare un mélange par voie sèche ou liquide, notamment en suspension aérienne de fibres, ce mélange renfermant un agent liant, et le mélange est déposé ou réparti sur un organe convoyeur et soumis aux opérations de prise ou durcissement de l'agent liant. Finalement un matériau solide est obtenu qui est découpé aux dimensions désirées pour façonner un produit final, le cas échéant avant des étapes de transformation ultérieures. Une première découpe est effectuée en ligne pour séparer des éléments individuels, et une ou plusieurs opérations de découpe peuvent être réalisées en reprise dans des ateliers de façonnage.

Il existe, dans les procédés en ligne, des dispositifs de découpe tels que des scies à guillotine, des scies à ruban, des scies circulaires, ou encore des fraises ou des toupies de découpe. Toutefois, ces dispositifs de découpe ont également comme inconvénient de générer beaucoup de poussière, ce qui est potentiellement dangereux pour les opérateurs. De plus, ces dispositifs de découpes ont généralement des dents de scie décalées dans l'épaisseur, ce qui peut générer des déchets importants et gâcher de la matière.

Il existe aussi des dispositifs à jets d'eau à haute pression, qui peuvent certes limiter les poussières mais ont l'inconvénient d'apporter une quantité d'eau importante sur les surfaces de découpe, qui peut être absorbée par le matériau poreux et pénaliser les propriétés y compris mécaniques du matériau au détriment de la qualité de la construction finale.

Il y a donc un besoin pour un dispositif de découpe de plaque ou panneau, qui permette de réaliser une découpe de matériau de construction poreux qui limite fortement les déchets et la poussière générés. US-A-4016856 montre le préambule de la revenciation 1.

Pour cela, l'invention propose un dispositif de découpe d'une plaque ou d'un panneau de matériau de construction poreux, comprenant :
- des moyens de déplacement de la plaque ou du panneau, qui comprennent au moins un convoyeur, aptes à se déplacer suivant une direction,
- un fil adapté à découper la plaque ou le panneau,
- des moyens de défilement du fil dans une direction perpendiculaire à la direction de déplacement de la plaque ou du panneau.

Selon une autre particularité, le fil est un fil en acier de diamètre compris entre 300 µm et 2 mm, en particulier entre 400 µm et moins de 1 mm, notamment entre 400 µm et 700 µm.

Selon une autre particularité, le fil comprend à sa surface des particules abrasives de taille préférentiellement comprise entre 30 et 80 µm.

Selon une autre particularité, les particules abrasives sont notamment des particules de diamant ou d'oxyde de zirconium ou de nitrure de bore.

Selon une autre particularité, le fil est fixé à chacune de ses extrémités à une bobine, le fil étant enroulé sur les deux bobines, asservies l'une à l'autre, l'espace entre les deux bobines étant supérieur à au moins une dimension de la plaque ou du panneau à découper.

Selon une autre particularité, la vitesse linéaire de défilement du fil est comprise entre 10 m/s et 20 m/s.

Selon une autre particularité, la tension du fil est comprise entre 150 N et 500 N.

Selon l'invention, le dispositif comprend en outre des moyens de préhension de la plaque ou du panneau, les moyens de préhensions comprenant un système de préhension sous vide adapté à se déplacer simultanément et dans la même direction que les moyens de déplacement de la plaque ou du panneau.

Selon une autre particularité, le dispositif comprend en outre des moyens de déplacement du fil, le fil étant apte à se déplacer à la fois dans une direction perpendiculaire à la direction de déplacement de la plaque ou panneau et à la direction de défilement du fil.

Selon une autre particularité, la vitesse de déplacement de la plaque ou du panneau est comprise entre 10 mm/s et 2 m/s, notamment entre 500 mm/s et 2 m/s pour une découpe dans l'épaisseur ou entre 10 mm/s et 2 m/s, notamment entre 10 mm/s et 250 mm/s pour une découpe sur les bords.

Selon une autre particularité, la vitesse de déplacement du fil est comprise entre 10 mm/s et 2 m/s, notamment entre 10 mm/s et 250 mm/s pour une découpe sur les bords.

Selon une autre particularité, le dispositif étant installé sur la ligne de production de la plaque ou du panneau de matériau de construction, la vitesse de déplacement de la plaque ou du panneau est d'au moins 1 m/min, de préférence d'au moins 2 m/min, la découpe pouvant être réalisée dans l'épaisseur ou sur les bords.

L'invention propose également un procédé de découpe de plaque ou panneau de matériau de construction poreux, comprenant les étapes suivantes :
- fourniture d'une plaque ou d'un panneau de matériau de construction poreux,
- déplacement de la plaque ou du panneau dans une direction par des moyens de déplacement qui comprennent au moins un convoyeur,
- découpe de la plaque ou du panneau par un fil apte à défiler selon une direction perpendiculaire à la direction de déplacement de la plaque ou du panneau.

Selon une autre particularité, la découpe est réalisée par un fil en acier de diamètre compris entre 300 µm et 2 mm, en particulier entre 400 µm et moins de 1 mm, notamment entre 400 µm et 700 µm.

Selon une autre particularité, le fil comprend à sa surface des particules abrasives, de taille préférentiellement comprise entre 30 et 80 µm.

Selon une autre particularité, les particules abrasives sont en diamant ou en oxyde de zirconium ou en nitrure de bore.

Selon une autre particularité, le fil s'enroule et se déroule sur deux bobines asservies l'une à l'autre, l'espace entre les deux bobines étant supérieur aux dimensions de la plaque ou du panneau à découper.

Selon une autre particularité, le fil défile à une vitesse linéaire comprise entre 10 m/s et 20 m/s.

Selon une autre particularité, la tension du fil est réglée à une valeur comprise entre 150 N et 500 N.

Selon une autre particularité, la plaque ou le panneau se déplace à une vitesse comprise entre 10 mm/s et 2 m/s, notamment entre 500 mm/s et 2 m/s pour une découpe dans l'épaisseur ou entre 10 mm/s et 2 m/s, notamment entre 10 mm/s et 250 mm/s pour une découpe sur les bords.

Selon une autre particularité, le procédé comprend en outre une étape de préhension de la plaque ou du panneau par des moyens de préhension, les moyens de préhensions comprenant un système de préhension sous vide adapté à se déplacer simultanément et dans la même direction que les moyens de déplacement de la plaque ou du panneau.

Selon une autre particularité, pendant l'étape de découpe de la plaque ou dub panneau, le fil est apte à se déplacer selon une direction perpendiculaire à la fois à la direction de déplacement de la plaque ou du panneau et à la direction de défilement du fil, de façon à réaliser une découpe selon deux directions perpendiculaires l'une à l'autre.

Selon une autre particularité, le fil se déplace à une vitesse comprise entre 10 mm/s et 2 m/s, notamment entre 10 mm/s et 250 mm/s pour une découpe sur les bords.

Selon une autre particularité, l'étape de découpe est effectuée sur la ligne de production de la plaque ou du panneau de matériau de construction, dans lequel la vitesse de déplacement de la plaque ou du panneau est d'au moins 1 m/min, de préférence d'au moins 2 m/min, la découpe pouvant être réalisée dans l'épaisseur ou sur les bords.

D'autres caractéristiques et avantages de l'invention vont à présent être décrits en regard des dessins sur lesquels :
- La figure 1 représente une vue de face d'un dispositif de découpe selon l'invention ;
- La figure 2 représente une vue de côté en détail du dispositif de découpe selon l'invention ;
- La figure 3 représente une vue en coupe d'un exemple de découpe dans une plaque ou un panneau, réalisée avec le dispositif selon l'invention.

Les numéros de référence qui sont identiques sur les différentes figures représentent des éléments similaires ou identiques.

L'invention se rapporte à un dispositif de découpe d'une plaque ou d'un panneau de matériau de construction poreux, comprenant des moyens de déplacement de la plaque ou du panneau, qui comprennent au moins un convoyeur, aptes à se déplacer suivant une direction X, un fil adapté à découper la plaque ou le panneau, et des moyens de défilement du fil dans une direction Y perpendiculaire à la direction X de déplacement de la plaque ou du panneau.

Le fil permet de limiter au maximum les pertes de matière et les déchets générés car le fil est beaucoup plus fin que les scies des dispositifs de découpe connus. De plus, la découpe par fil ne génère quasiment pas de poussière, ce qui permet d'améliorer les conditions de travail des opérateurs.

En particulier dans le cas d'un produit en laine de roche renfermant des grains de matière infibrée, il a été observé que les résidus particulaires de découpe sont considérablement réduits en nombre et en masse, et qu'ils contiennent beaucoup moins de grains qu'avec une découpe classique, les grains restant majoritairement inclus dans le produit minéral. On fait ici l'hypothèse que le fil de découpe se crée un chemin entre les fibres, respectivement entre les fibres et les grains, et effectue une libération des fibres par écartement de l'enchevêtrement fibreux, plutôt qu'une cassure des fibres. Ceci peut être obtenu grâce au choix d'un fil suffisamment fin par rapport aux défauts du produit fibreux, typiquement de diamètre inférieur à la taille des particules infibrées qui peuvent faire de 1 à plusieurs millimètres de diamètre.

On entend par « plaque ou panneau », soit une bande continue, soit une objet de forme sensiblement parallélépipédique, qui résulte généralement de la découpe en ligne après durcissement du liant, et qui peut même avoir été redé-coupé hors ligne ultérieurement. Les termes « plaque ou panneau » incluent des plaques ou panneaux adaptés à être roulés pour leur commercialisation.

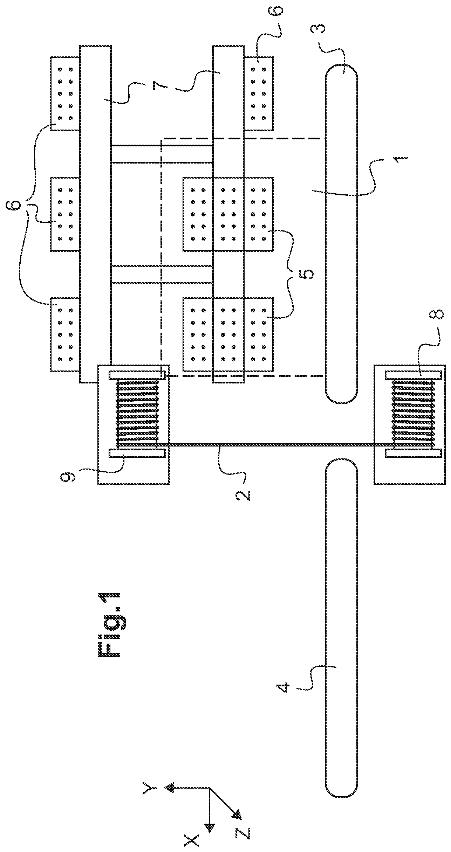

La figure 1 représente une vue de face du dispositif de découpe selon l'invention.

La plaque ou le panneau 1 de matériau de construction poreux, destiné à être découpé sur le dispositif selon l'invention, a par exemple une densité supérieure ou égale à 5 kg/m³, en particulier au moins 10 kg/m³, notamment au moins 20 à 25 kg/m³ et de préférence inférieure à 180 kg/m³.

Le dispositif de découpe selon l'invention comprend des moyens de déplacement d'une plaque ou d'un panneau 1 de matériau de construction poreux dans une direction X, ainsi qu'un fil 2 adapté à découper la plaque ou le panneau 1. Le dispositif de découpe selon l'invention comprend également des moyens 8, 9 de défilement du fil 2 dans une direction Y perpendiculaire à la direction X de déplacement de la plaque ou du panneau 1. Ici, les moyens de défilement 8, 9 du fil sont des bobines. Alternativement, le fil peut défiler selon la direction Y par un mouvement de va-et-vient ou de réciprocation.

Selon les modes de réalisation, le fil peut être fixe par rapport à la direction Z ou apte à se déplacer selon cette direction Z, la direction Z étant perpendiculaire à la fois à la direction X de déplacement de la plaque ou du panneau 1 et à la direction Y de défilement du fil 2.

Les moyens de déplacement de la plaque ou du panneau 1 comprennent au moins un convoyeur 3, 4. Le convoyeur 3, 4 est un convoyeur à bande horizontal sur lequel repose la plaque ou le panneau 1. Le convoyeur peut avancer ou reculer en fonction des besoins de la découpe. La direction de déplacement est l'axe X sur la figure 1. La plaque ou le panneau 1 peut reposer horizontalement, posé à plat, ou verticalement, posé sur sa tranche, sur le convoyeur 3, 4.

Le convoyeur 3, 4 est de préférence en deux parties lorsque le fil 2 est apte à se déplacer dans la direction Z. Ainsi, un espace est prévu entre les deux parties de convoyeur 3, 4 pour permettre le passage du fil 2 pour la découpe transversale de la plaque ou du panneau 1, sans être gêné par le convoyeur.

Lorsque la plaque ou le panneau 1 est sous forme de bande continue horizontale, le fil 2 peut permettre une découpe en ligne, par exemple en deux dans l'épaisseur. Le fil 2 est alors fixe et la plaque ou le panneau repose horizontalement sur le convoyeur.

Lorsque la plaque ou panneau 1 est sous forme de bande continue horizontale, le fil 2 peut aussi permettre une découpe transversale en ligne, par exemple pour former des plaques ou panneaux de forme sensiblement parallélépipédique. Le fil 2 est alors apte à se déplacer dans la direction Z.

Lorsque la plaque ou panneau 1 repose verticalement sur le convoyeur 3, 4 horizontal, le fil 2 peut être fixe par rapport à l'axe Z ou apte à se déplacer dans la direction Z.

Selon les modes de réalisation, le dispositif de découpe selon l'invention peut donc comprendre des moyens de déplacement du fil 2 dans la direction Z, ces moyens de déplacement permettant un déplacement du fil 2 dans une direction Z perpendiculaire à la fois à la direction X de déplacement de la plaque ou du panneau 1 et à la direction Y de défilement du fil 2. Ainsi, le dispositif permet de réaliser des découpes selon deux directions perpendiculaires l'une à l'autre. De la sorte, plusieurs découpes différentes peuvent être réalisées en une seule passe. De plus, en combinant les deux mouvements de déplacement dans les directions X et Z, on peut réaliser des découpes de formes variées.

Par ailleurs, lorsque la plaque ou le panneau 1 repose verticalement sur le convoyeur horizontal, le dispositif comprend des moyens de préhension 5, 6, 7 de la plaque ou du panneau 1 afin de maintenir la plaque ou le panneau en position. Dans ce cas-là, les moyens de préhension 5, 6, 7 de la plaque ou du panneau 1 sont aptes à se déplacer simultanément et dans la même direction X que le convoyeur 3, 4 pour un mouvement uniforme de la plaque ou du panneau 1.

Les moyens de préhension de la plaque ou panneau 1 comprennent un système de préhension sous vide 5, 6, 7. Le système de préhension sous vide 5, 6, 7 est constitué de préhenseurs 5, 6 sous vide fixés sur un support mobile 7 adapté à se déplacer en même temps que le ou les convoyeurs 3, 4 pendant la découpe de la plaque ou du panneau 1. Les préhenseurs sous vide 5, 6 peuvent être sous forme de plaques percées d'une multitude d'orifices reliés à un moyen de dépressurisation ; le diamètre des orifices sont choisis en fonction de la force que l'on souhaite appliquer localement sur la plaque ou le panneau 1. Les préhenseurs 5,6 peuvent avoir différentes tailles, comme représenté sur la figure 1. La plaque ou le panneau 1 doit être parfaitement tenu par les préhenseurs sous vide 5, 6 pendant la découpe par le fil 2 pour permettre une découpe la plus précise possible. Les préhenseurs de taille plus importante 5 permettent un meilleur maintien des plaques ou panneaux de petite taille. Les préhenseurs sous vide 5, 6 doivent permettre de maintenir la plaque 1 sans la contraindre, sans la déformer. Ces préhenseurs sous vide reprennent les efforts exercés par le fil lors du déplacement de la plaque ou panneau 1 et/ou du fil 2 pour assurer une maîtrise parfaite du positionnement dynamique de la plaque ou du panneau, et en évitant tout glissement de la plaque ou du panneau par rapport au préhenseur. La synchronisation des différents mouvements est assurée par un système numérique de commande. Sur la figure 1, seuls les préhenseurs sous vide 5 maintiennent la plaque ou panneau 1 car dans cet exemple de réalisation la plaque ou le panneau est de taille réduite. Les préhenseurs sous vide 6, périphériques, sont utilisés en complément des préhenseurs sous vide 5 pour des plaques ou panneaux 1 de taille plus grande.

Le fil 2 est de préférence un fil en acier de diamètre compris entre 300 µm et 2 mm, en particulier entre 400 µm et moins de 1 mm, notamment entre 400 µm et 700 µm, de préférence entre 420 µm et 550 µm pour améliorer la qualité de la découpe, voire entre 480 µm et 520 µm pour améliorer encore la qualité de la découpe. Le fil acier peut comporter à sa surface des particules abrasives, qui sont par exemple en diamant, en oxyde de zirconium ou en nitrure de bore. La taille des particules abrasives est de préférence comprise entre 30 et 80 µm. L'espace entre les particules abrasives est de préférence compris entre 10 µm et 20 µm. La présence de particules abrasives permet de réaliser une découpe nette, qui permet de s'affranchir d'un ponçage ultérieur.

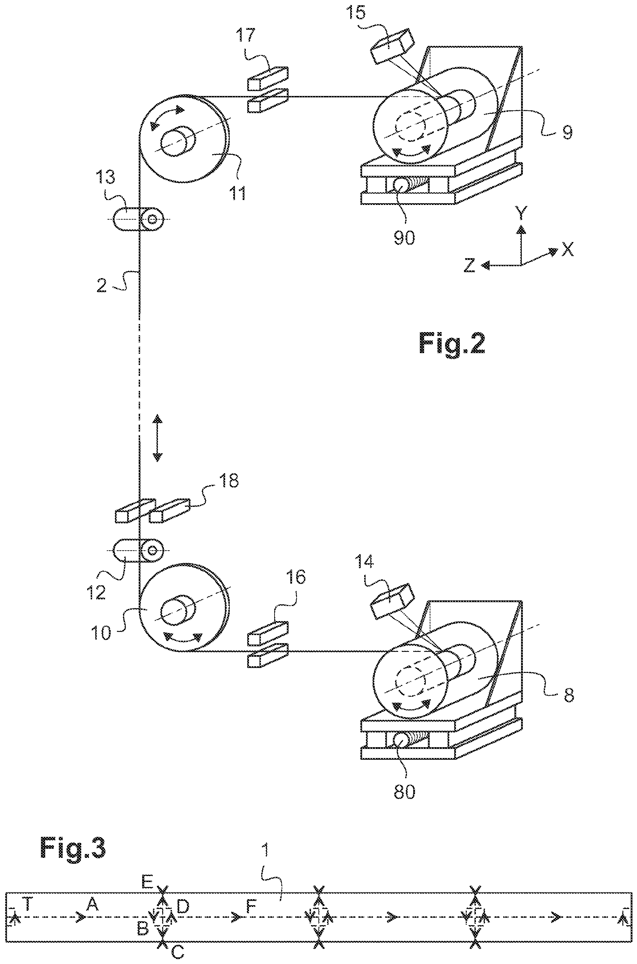

Selon un mode de réalisation de l'invention, le fil 2 est fixé à chacune de ses extrémités à une bobine 8, 9. Le fil 2 est enroulé sur les deux bobines 8, 9, l'espace entre les deux bobines 8, 9 étant supérieur à au moins une dimension de la plaque ou du panneau 1 à découper. Le fil 2 est de préférence vertical (selon l'axe Y), comme représenté sur les figures 1 et 2. Chacune des bobines inférieure 8 et supérieure 9 est entraînée en rotation par un moteur (non représenté). Les bobines 8, 9 sont asservies l'une à l'autre par un système d'asservissement pour permettre de conserver une tension de fil constante et pour maîtriser la vitesse de défilement du fil 2. Ce système d'asservissement est décrit plus en détail plus loin dans le texte. Le fil 2 a une longueur par exemple comprise entre 5 et 15 km. Il se déroule d'une bobine pour s'enrouler sur l'autre bobine. Lorsqu'une bobine 8, 9 est vide et que l'autre est pleine, le sens de défilement du fil 2 s'inverse pour que le fil s'enroule sur la bobine vide et se déroule de la bobine pleine.

La figure 2 représente une vue de côté en détail du dispositif de découpe selon l'invention.

Le fil 2 est guidé, à la sortie de chacune des bobines 8, 9, par une poulie de guidage 10, 11 respectivement, qui assure le positionnement du fil 2 par rapport à la plaque ou au panneau 1 à découper. A la sortie de chacune des poulies de guidage 10, 11, le fil est encore guidé par un galet 12, 13 respectivement, qui permet de positionner encore plus précisément le fil. Ainsi, lorsque le fil 2 est en position verticale (selon l'axe Y), comme sur les figures 1 et 2, le fil 2 passe par exemple par la bobine inférieure 8 puis par la poulie de guidage 10 inférieure puis par le galet 12 inférieur puis par le galet 13 supérieur puis par la poulie de guidage 11 supérieure puis par la bobine 9 supérieure. Lors de la découpe par le fil 2, la plaque 1 passe entre les deux galets 12, 13.

La vitesse linéaire de défilement du fil 2 est comprise entre 10 m/s et 20 m/s, de préférence entre 14 m/s et 16 m/s, voire est égale à 15 m/s, pour améliorer encore la qualité de la découpe. Le fil 2 défile à sec, sans passage dans un liquide de refroidissement.

La tension du fil 2 est comprise entre 150 N et 500 N, de préférence entre 250 N et 350 N pour améliorer encore la qualité de la découpe. La tension du fil diamanté dépend du diamètre du fil. Plus le fil est tendu, plus sa flexion est réduite. Le fil 2 pouvant être soumis à des contraintes très importantes, il est de préférence en acier à très haute limite d'élasticité pouvant résister à des contraintes pouvant atteindre 1000 MPa, voire 2000 MPa.

Le diamètre, la vitesse linéaire et la tension du fil 2 sont trois paramètres très importants pour une découpe nette de la plaque. Aussi, le dispositif de découpe selon l'invention comprend plusieurs capteurs reliés au système d'asservissement, qui permettent au système d'asservissement d'adapter en temps réel (toutes les 5 ms) la vitesse de rotation des bobines 8, 9 pour maintenir une vitesse linéaire et une tension constantes pendant la découpe.

Ainsi, le dispositif de découpe comprend, en face de chaque bobine 8, 9 un capteur optique 14, 15 respectivement, qui mesure le diamètre de la bobine (ou plus précisément le diamètre extérieur de l'enroulement de fil sur la bobine) : comme expliqué plus haut, le diamètre de la bobine varie au cours de la découpe à mesure que le fil se déroule d'une bobine pour s'enrouler sur l'autre bobine. Cette variation de diamètre est prise en compte en temps réel pour ajuster la vitesse d'enroulement/déroulement des bobines 8, 9 et garantir la vitesse linéaire souhaitée. Les données de ces capteurs optiques 14, 15 permettent également l'évaluation de la longueur de fil restante sur chacune des bobines.

Le dispositif de découpe comprend également deux capteurs de mesure de positionnement 16, 17 positionnés respectivement entre la bobine 8 inférieure et la poulie de guidage 10 inférieure, et entre la bobine 9 supérieure et la poulie de guidage 11 supérieure. Ces capteurs 16 et 17 mesurent la position et la flexion du fil 2 selon l'axe X. Chacune des bobines 8, 9 est montée sur une vis sans fin, 80, 90 respectivement, d'axe parallèle à la direction X, pour permettre un alignement en temps réel entre la position du fil 2 s'enroulant/se déroulant des bobines 8, 9 et la position des poulies de guidage 10, 11, selon l'axe X. Les capteurs 16, 17 permettent de régler cette fonction de troncannage.

Le dispositif de découpe comprend également un capteur de mesure de flexion 18 positionné entre les galets 12, 13. Ce capteur de mesure de flexion 18 permet de mesurer la déformation du fil selon l'axe X, imposée par la poussée opérée par le produit dans son déplacement relatif par rapport au fil. Les données de ce capteur de mesure de flexion 18, couplées aux données des capteurs optiques 14, 15, permettent d'ajuster en temps réel la tension du fil en ajustant la vitesse d'enroulement/déroulement des bobines 8, 9. Ce capteur de flexion 18 permet ainsi de régler la rectitude du fil.

Les capteurs de mesure de positionnement et de flexion 16 à 18 sont par exemple des barrettes numériques munies d'une pluralité de faisceaux laser qui détectent la trace du fil.

Grâce à ces capteurs 14 à 18, qui sont des moyens de contrôle très précis de la tension du fil, on peut ainsi minimiser l'amplitude de vibration du fil, de sorte que plus aucune onde n'est perceptible par un examen visuel de la face coupée, ce qui procure une esthétique quasi parfaite. La tension du fil, ajustée pour éviter les vibrations, fait que le fil se comporte plus comme un coin qui propage une fissure dans la matériau que comme un couteau qui coupe les fibres en deux.

Enfin, l'ensemble formé par le fil 2, les bobines 8, 9, les poulies de guidage 10, 11, les galets 12, 13 et les capteurs 14 à 18 est monté sur un châssis ou un montant (non représenté), lui-même associé à des moyens de déplacement (non représentés). Ces moyens de déplacement permettent un déplacement du fil 2 dans la direction Z de la figure 1, soit selon un axe perpendiculaire à la fois à la direction de déplacement de la plaque ou du panneau 1, qui est selon l'axe X, et à la direction Y de défilement du fil 2. Les deux mouvements de déplacement selon les axes X et Z peuvent être combinés pour réaliser des découpes de forme complexe. La vitesse de déplacement du fil 2 selon l'axe Z est comprise entre 10 mm/s et 2 m/s, notamment entre 10 mm/s et 250 mm/s pour une découpe sur les bords afin de permettre une précision du motif géométrique des bords.

Le dispositif de découpe selon l'invention permet de découper une plaque ou un panneau 1 :
- dans sa largeur ou sa longueur afin d'obtenir une plaque ou un panneau de plus petite dimension,
- dans son épaisseur afin d'obtenir au moins deux plaques ou panneaux d'épaisseur inférieure à celle de la plaque ou du panneau de départ, et/ou
- sur ses bords afin de réaliser une feuillure ou toute autre forme de détail de bord.

Pendant la découpe, la vitesse de déplacement de la plaque ou du panneau 1 est comprise entre 500 mm/s et 2 m/s pour la découpe dans l'épaisseur de type refente et entre 10 mm/s et 2 m/s, notamment entre 10 mm/s et 250 mm/s pour une découpe sur les bords afin de permettre une précision du motif géométrique des bords. La plaque ou le panneau 1 se déplace par mise en mouvement conjointe des convoyeurs 3, 4 et du système de préhension sous vide 5, 6, 7.

Les feuillures ou découpes de bord peuvent avoir toutes formes imaginables, avec des géométries aussi variées que carrées, rectangles, triangles, polygonales, arrondies, curvilignes, sinusoïdales, etc...

Les mouvements de déplacement de la plaque ou du panneau, les mouvements de déplacement du fil, les vitesses d'enroulement/de déroulement des bobines, les mouvements des vis sans fin et l'actionnement des préhenseurs sous vide sont motorisés et commandés par un système général de commande du dispositif.

Le dispositif de découpe selon l'invention permet de réaliser par exemple des panneaux acoustiques en laine minérale pour plafond. Les feuillures de tels panneaux acoustiques, réalisées sur chacun de ses bords, sont destinées à reposer sur une ossature métallique fixée au plafond. De tels panneaux sont généralement de forme carrée, mais peuvent aussi être rectangulaires. Lorsque la plaque ou le panneau est découpée en deux dans l'épaisseur à partir d'une plaque ou d'un panneau revêtu d'un voile sur ses deux faces principales, le panneau résultant a généralement un voile sur une seule de ses faces principales. Un voile peut alors être collé sur l'autre face principale du panneau issu de la découpe.

Le dispositif de découpe selon l'invention permet par exemple de découper une plaque ou un panneau à la fois dans son épaisseur, transversalement dans sa largeur, et sur ses bords pour réaliser des feuillures ou tout autre détail de bord, comme montré sur la figure 3 par exemple.

La figure 3 représente une vue en coupe d'un exemple de découpe dans une plaque ou un panneau, réalisée avec le dispositif selon l'invention, suivant un chemin défini par la succession de tronçons repérés par les lettres capitales.

Ainsi, la plaque ou le panneau peut être découpé(e) sur un de ses bords pour réaliser une feuillure (repère T) , puis en deux dans son épaisseur (repère A), puis transversalement dans sa largeur avec simultanément découpe de feuillures (repères B, C, D, E), puis à nouveau découpe en deux dans l'épaisseur (repère F), et ainsi de suite de façon à former plusieurs plaques ou panneaux avec des feuillures découpées sur deux bords opposés. Chaque plaque ou panneau obtenu est alors tourné de 90° pour réaliser une découpe transversale dans le sens de la longueur initiale avec simultanément découpe des feuillures sur les deux bords restants. La rotation de 90° peut être effectuée au moyen d'un système de préhenseurs sous vide analogue aux préhenseurs 5, 6, disposés en vis-à-vis des préhenseurs 5, 6. En variante, les panneaux découpés peuvent être convoyés vers une autre station de découpe équipée d'un autre fil agencé pour réaliser la découpe de feuillure sur les bords restants.

Il est aussi possible de réaliser d'abord la découpe de la plaque ou panneau à la bonne taille puis de réaliser la découpe des feuillures.

On obtient alors un ou plusieurs plaques ou panneaux, par exemple carrés ou rectangulaires, avec des feuillures sur chacun de leurs bords.

L'invention concerne également un procédé de découpe mettant en oeuvre le dispositif de découpe selon l'invention.

Ainsi, le procédé de découpe de plaque ou panneau en matériau de construction poreux comprend les étapes suivantes :
- fourniture d'une plaque ou d'un panneau 1 de matériau de construction poreux,
- déplacement de la plaque ou du panneau 1 dans une direction X par des moyens de déplacement 3, 4 qui comprennent au moins un convoyeur,
- découpe de la plaque ou du panneau par un fil 2 apte à défiler selon une direction Y perpendiculaire à la direction X de déplacement de la plaque ou du panneau 1.

Pendant la découpe, la plaque ou le panneau 1 se déplace grâce au convoyeur 3, 4. Il peut être tenu grâce au système de préhension sous vide 5, 6, 7. Le fil 2 peut être apte à se déplacer dans une direction perpendiculaire à la fois à la direction X de déplacement de la plaque ou panneau 1 et à la direction Y de défilement du fil.

Le procédé de découpe peut être réalisé en ligne, à la fin de la ligne de production de la plaque ou du panneau 1. Dans ce cas, le dispositif de découpe est installé en ligne. la vitesse de déplacement de la plaque ou du panneau 1 est d'au moins 1 ou 2 m/min, de préférence d'au moins 15 m/min, voire d'au moins 30 m/min, la découpe pouvant être réalisée dans l'épaisseur ou sur les bords.

## Revendications

1. Dispositif de découpe d'une plaque ou d'un panneau (1) de matériau de construction poreux, comprenant :
- des moyens de déplacement (3, 4) de la plaque ou du panneau (1), qui comprennent au moins un convoyeur, aptes à se déplacer suivant une direction (X),
- un fil (2) adapté à découper la plaque ou le panneau (1),
- des moyens de défilement (8, 9) du fil (2) dans une direction (Y) perpendiculaire à la direction (X) de déplacement de la plaque ou du panneau (1),
ledit dispositif de découpe étant **caractérisé en ce qu'**il comporte en outre des moyens de préhension (5, 6, 7) de la plaque ou du panneau (1), les moyens de préhensions comprenant un système de préhension sous vide adapté à se déplacer simultanément et dans la même direction (X) que les moyens de déplacement (3, 4) de la plaque ou du panneau (1).

2. Dispositif de découpe selon la revendication 1, dans lequel le fil (2) est un fil en acier de diamètre compris entre 300 µm et 2 mm, en particulier entre 400 µm et moins de 1 mm, notamment entre 400 µm et 700 µm.

3. Dispositif de découpe selon la revendication 2, dans lequel le fil comprend à sa surface des particules abrasives de taille préférentiellement comprise entre 30 et 80 µm.

4. Dispositif de découpe selon la revendication 3, dans lequel les particules abrasives sont notamment des particules de diamant ou d'oxyde de zirconium ou de nitrure de bore.

5. Dispositif de découpe selon l'une des revendications 1 à 4, dans lequel le fil (2) est fixé à chacune de ses extrémités à une bobine (8, 9), le fil (2) étant enroulé sur les deux bobines (8, 9), asservies l'une à l'autre, l'espace entre les deux bobines (8, 9) étant supérieur à au moins une dimension de la plaque ou du panneau (1) à découper.

6. Dispositif de découpe selon l'une des revendications 1 à 5, dans lequel la vitesse linéaire de défilement du fil (2) est comprise entre 10 m/s et 20 m/s.

7. Dispositif de découpe selon l'une des revendications 1 à 6, dans lequel la tension du fil (2) est comprise entre 150 N et 500 N.

8. Dispositif de découpe selon l'une des revendications 1 à 7, comprenant en outre des moyens de déplacement du fil (2), le fil étant apte à se déplacer à la fois dans une direction perpendiculaire à la direction (X) de déplacement de la plaque ou panneau (1) et à la direction (Y) de défilement du fil (2).

9. Dispositif de découpe selon l'une des revendications 1 à 8, dans lequel la vitesse de déplacement de la plaque ou du panneau (1) est comprise entre 10 mm/s et 2 m/s, notamment entre 500 mm/s et 2 m/s pour une découpe dans l'épaisseur ou entre 10 mm/s et 2 m/s, notamment entre 10 mm/s et 250 mm/s pour une découpe sur les bords.

10. Dispositif de découpe selon l'une des revendications 1 à 9, dans lequel la vitesse de déplacement du fil (2) est comprise entre 10 mm/s et 2 m/s, notamment entre 10 mm/s et 250 mm/s pour une découpe sur les bords.

11. Dispositif de découpe selon l'une des revendications 1 à 8, installé sur la ligne de production de la plaque ou du panneau de matériau de construction, dans lequel la vitesse de déplacement de la plaque ou du panneau (1) est d'au moins 15 m/min, de préférence d'au moins 30 m/min, la découpe pouvant être réalisée dans l'épaisseur ou sur les bords.

12. Procédé de découpe de plaque ou panneau (1) de matériau de construction poreux, comprenant les étapes suivantes :
- fourniture d'une plaque ou d'un panneau (1) de matériau de construction poreux,
- déplacement de la plaque ou du panneau (1) dans une direction (X) par des moyens de déplacement (3, 4) qui comprennent au moins un convoyeur,
- découpe de la plaque ou du panneau (1) par un fil (2) apte à défiler selon une direction (Y) perpendiculaire à la direction (X) de déplacement de la plaque ou du panneau (1),
ledit procédé étant **caractérisé en ce qu'**il comprend en outre une étape de préhension de la plaque ou du panneau (1) par des moyens de préhension (5, 6, 7), les moyens de préhensions comprenant un système de préhension sous vide adapté à se déplacer simultanément et dans la même direction que les moyens de déplacement (3, 4) de la plaque ou du panneau (1).

13. Procédé de découpe selon la revendication 12, dans lequel la découpe est réalisée par un fil en acier de diamètre compris entre 400 µm et 2 mm, en particulier entre 400 µm et moins de 1 mm, notamment entre 300 µm et 700 µm.

14. Procédé de découpe selon la revendication 13, dans lequel le fil (2) comprend à sa surface des particules abrasives, de taille préférentiellement comprise entre 30 et 80 µm.

15. Procédé de découpe selon la revendication 14, dans lequel les particules abrasives sont en diamant ou en oxyde de zirconium ou en nitrure de bore.

16. Procédé de découpe selon l'une des revendications 12 à 15, dans lequel le fil (2) s'enroule et se déroule sur deux bobines (8, 9) asservies l'une à l'autre, l'espace entre les deux bobines (8, 9) étant supérieur aux dimensions de la plaque ou du panneau (1) à découper.

17. Procédé de découpe selon l'une des revendications 12 à 16, dans lequel le fil (2) défile à une vitesse linéaire comprise entre 10 m/s et 20 m/s.

18. Procédé de découpe selon l'une des revendications 12 à 17, dans lequel la tension du fil (2) est réglée à une valeur comprise entre 150 N et 500 N.

19. Procédé de découpe selon l'une des revendications 12 à 18, dans lequel la plaque ou le panneau (1) se déplace à une vitesse comprise entre 10 mm/s et 2 m/s, notamment entre 500 mm/s et 2 m/s pour une découpe dans l'épaisseur ou entre 10 mm/s et 2 m/s, notamment entre 10 mm/s et 250 mm/s pour une découpe sur les bords.

20. Procédé de découpe selon l'une des revendications 12 à 19, dans lequel, pendant l'étape de découpe de la plaque ou du panneau, le fil (2) est apte à se déplacer selon une direction (Y) perpendiculaire à la fois à la direction (X) de déplacement de la plaque ou du panneau (1) et à la direction (Y) de défilement du fil (2), de façon à réaliser une découpe selon deux directions perpendiculaires l'une à l'autre.

21. Procédé de découpe selon la revendication 20, dans lequel le fil (2) se déplace à une vitesse comprise entre 10 mm/s et 2 m/s, notamment entre 10 mm/s et 250 mm/s pour une découpe sur les bords.

22. Procédé de découpe selon l'une des revendications 12 à 20, dans lequel l'étape de découpe est effectuée sur la ligne de production de la plaque ou du panneau de matériau de construction, dans lequel la vitesse de déplacement de la plaque ou du panneau (1) est d'au moins 15 m/min, de préférence d'au moins 30 m/min, la découpe pouvant être réalisée dans l'épaisseur ou sur les bords.

## Patentansprüche

1. Vorrichtung zum Schneiden einer Platte oder eines Paneels (1) aus porösem Baumaterial, umfassend:
- Mittel (3, 4) zum Bewegen der Platte oder des Paneels (1), die mindestens einen Förderer umfassen, die geeignet sind, um sich entlang einer Richtung (X) zu bewegen,
- einen Draht (2), der angepasst ist, um die Platte oder das Paneel (1) zu schneiden,
- Mittel (8, 9) zum Abrollen des Drahts (2) in einer Richtung (Y) senkrecht zu der Bewegungsrichtung (X) der Platte oder des Paneels (1), wobei die Schneidvorrichtung **dadurch gekennzeichnet ist, dass** sie ferner Mittel (5, 6, 7) zum Greifen der Platte oder des Paneels (1) aufweist, die Greifmittel umfassend ein Vakuumgreifsystem, das angepasst ist, um sich gleichzeitig und in der gleichen Richtung (X) wie die Bewegungsmittel (3, 4) der Platte oder des Paneels (1) zu bewegen.

2. Schneidvorrichtung nach Anspruch 1, wobei der Draht (2) ein Stahldraht mit einem Durchmesser zwischen 300 µm und 2 mm, im Besonderen zwischen 400 µm und weniger als 1 mm, insbesondere zwischen 400 µm und 700 µm ist.

3. Schneidvorrichtung nach Anspruch 2, wobei der Draht an seiner Oberfläche Schleifpartikel mit einer Größe vorzugsweise zwischen 30 und 80 µm umfasst.

4. Schneidvorrichtung nach Anspruch 3, wobei die Schleifpartikel insbesondere Diamant- oder Zirkoniumoxid- oder Bornitridpartikel sind.

5. Schneidvorrichtung nach einem der Ansprüche 1 bis 4, wobei der Draht (2) an jedem seiner Enden an einer Spule (8, 9) befestigt ist, wobei der Draht (2) auf die zwei Spulen (8, 9) aufgewickelt sind, die einander untergeordnet sind, wobei der Raum zwischen den zwei Spulen (8, 9) größer als mindestens eine Abmessung der/des zu schneidenden Platte oder Paneels (1) ist.

6. Schneidvorrichtung nach einem der Ansprüche 1 bis 5, wobei die lineare Abrollgeschwindigkeit des Drahts (2) zwischen 10 m/s und 20 m/s liegt.

7. Schneidvorrichtung nach einem der Ansprüche 1 bis 6, wobei die Spannung des Drahts (2) zwischen 150 N und 500 N liegt.

8. Schneidvorrichtung nach einem der Ansprüche 1 bis 7, umfassend ferner Mittel zum Bewegen des Drahts (2), wobei der Draht geeignet ist, um sich zugleich in einer Richtung senkrecht zu der Bewegungsrichtung (X) der Platte oder des Paneels (1) und zu der Abrollrichtung (Y) des Drahts (2) zu bewegen.

9. Schneidvorrichtung nach einem der Ansprüche 1 bis 8, wobei die Bewegungsgeschwindigkeit der Platte oder des Paneels (1) zwischen 10 mm/s und 2 m/s, insbesondere zwischen 500 mm/s und 2 m/s für einen Schnitt in der Dicke oder zwischen 10 mm/s und 2 m/s, insbesondere zwischen 10 mm/s und 250 mm/s für einen Schnitt an den Rändern liegt.

10. Schneidvorrichtung nach einem der Ansprüche 1 bis 9, wobei die Bewegungsgeschwindigkeit des Drahts (2) zwischen 10 mm/s und 2 m/s, insbesondere zwischen 10 mm/s und 250 mm/s für einen Schnitt an den Rändern liegt.

11. Schneidvorrichtung nach einem der Ansprüche 1 bis 8, die auf der Produktionslinie der Platte oder des Paneels aus Baumaterial installiert ist, wobei die Bewegungsgeschwindigkeit der Platte oder des Paneels (1) mindestens 15 m/min, vorzugsweise mindestens 30 m/min beträgt, wobei der Schnitt in der Dicke oder an den Rändern ausgeführt werden kann.

12. Verfahren zum Schneiden einer Platte oder eines Paneels (1) aus porösem Baumaterial, umfassend die folgenden Schritte:
- Bereitstellen einer Platte oder eines Paneels (1) aus porösem Baumaterial,
- Bewegen der Platte oder des Paneels (1) in einer Richtung (X) durch Bewegungsmittel (3, 4), die mindestens einen Förderer umfassen,
- Schneiden der Platte oder des Paneels (1) durch einen Draht (2), der geeignet ist, um in einer Richtung (Y) senkrecht zu der Bewegungsrichtung (X) der Platte oder des Paneels (1) abzurollen,
wobei das Verfahren **dadurch gekennzeichnet ist, dass** es ferner einen Schritt des Greifens der Platte oder des Paneels (1) durch Greifmittel (5, 6, 7) aufweist, die Greifmittel umfassend ein Vakuumgreifsystem, das angepasst ist, um sich gleichzeitig und in der gleichen Richtung wie die Bewegungsmittel (3, 4) der Platte oder des Paneels (1) zu bewegen.

13. Schneidverfahren nach Anspruch 12, wobei der Schnitt durch einen Stahldraht mit einem Durchmesser zwischen 400 µm und 2 mm, im Besonderen zwischen 400 µm und weniger als 1 mm, insbesondere zwischen 300 µm und 700 µm ausgeführt wird.

14. Schneidverfahren nach Anspruch 13, wobei der Draht (2) an seiner Oberfläche Schleifpartikel mit einer Größe vorzugsweise zwischen 30 und 80 µm umfasst.

15. Schneidverfahren nach Anspruch 14, wobei die Schleifpartikel aus Diamant- oder Zirkoniumoxid- oder Bornitrid sind.

16. Schneidverfahren nach einem der Ansprüche 12 bis 15, wobei sich der Draht (2) auf die zwei Spulen (8, 9) aufwickelt und abwickelt, die einander untergeordnet sind, wobei der Raum zwischen den zwei Spulen (8, 9) größer als die Abmessungen der/des zu schneidenden Platte oder Paneels (1) ist.

17. Schneidverfahren nach einem der Ansprüche 12 bis 16, wobei der Draht (2) mit einer linearen Geschwindigkeit zwischen 10 m/s und 20 m/s abrollt.

18. Schneidverfahren nach einem der Ansprüche 12 bis 17, wobei die Spannung des Drahts (2) auf einen Wert geregelt ist, der zwischen 150 N und 500 N liegt.

19. Schneidverfahren nach einem der Ansprüche 12 bis 18, wobei sich die Platte oder das Paneel (1) mit einer Geschwindigkeit zwischen 10 mm/s und 2 m/s, insbesondere zwischen 500 mm/s und 2 m/s für einen Schnitt in der Dicke und zwischen 10 mm/s und 2 m/s, insbesondere zwischen 10 mm/s und 250 mm/s für einen Schnitt an den Rändern bewegt.

20. Schneidverfahren nach einem der Ansprüche 12 bis 19, wobei während dem Schritt des Schneidens der Platte oder des Paneels der Draht (2) geeignet ist, um sich in einer Richtung (Y) zu bewegen, die gleichzeitig senkrecht zu der Bewegungsrichtung (X) der Platte oder des Paneels (1) und zu der Abrollrichtung (Y) des Drahts (2) ist, um einen Schnitt in zwei Richtungen auszuführen, die senkrecht zueinander sind.

21. Schneidverfahren nach Anspruch 20, wobei sich der Draht (2) mit einer Geschwindigkeit zwischen 10 mm/s und 2 m/s, insbesondere zwischen 10 mm/s und 250 mm/s für einen Schnitt an den Rändern bewegt.

22. Schneidverfahren nach einem der Ansprüche 12 bis 20, wobei der Schneidschritt auf der Produktionslinie der Platte oder des Paneels aus Baumaterial ausgeführt wird, wobei die Bewegungsgeschwindigkeit der Platte oder des Paneels (1) mindestens 15 m/min, vorzugsweise mindestens 30 m/min beträgt, wobei der Schnitt in der Dicke oder an den Rändern ausgeführt werden kann.

## Claims

1. A device for cutting a plate or panel (1) of porous construction material, comprising:
- movement means (3, 4) that move the plate or panel (1) and comprise at least one conveyor, and which are able to move in a direction (X),
- a wire (2) intended to cut the plate or panel (1),
- means (8, 9) of passing the wire (2) in a direction (Y) perpendicular to the direction (X) of travel of the plate or panel (1),
the device for cutting being **characterized in that** it comprising holding means (5, 6, 7) that hold the plate or panel (1), the holding means comprising a vaccum holding system designed to move simultaneously with and in the same direction (X) as the movement means (3, 4) that move the plate or panel (1).

2. The cutting device as claimed in claim 1, in which the wire (2) is a steel wire of a diameter comprised between 300 µm and 2 mm, particularly between 400 µm and under 1 mm, in particular between 400 µm and 700 µm.

3. The cutting device as claimed in claim 2, in which the wire at its surface comprises abrasive particles, of a size preferably comprised between 30 and 80 µm.

4. The cutting device as claimed in claim 3, in which the abrasive particles are, in particular, particles of diamond or of zirconium oxide or of boron nitride.

5. The cutting device as claimed in one of claims 1 to 4, in which the wire (2) is fixed at each of its ends to a reel (8, 9), the wire (2) being wound on the two reels (8, 9), which are slaved to one another, the space between the two reels (8, 9) being greater than at least one dimension of the plate or panel (1) that is to be cut.

6. The cutting device as claimed in one of claims 1 to 5, in which the linear speed at which the wire (2) passes is comprised between 10 m/s and 20 m/s.

7. The cutting device as claimed in one of claims 1 to 6, in which the tension in the wire (2) is comprised between 150 N and 500 N.

8. The cutting device as claimed in one of claims 1 to 7, further comprising movement means that move the wire (2), the wire being able to move both in a direction perpendicular to the direction (X) of travel of the plate or panel (1) and to the direction (Y) in which the wire (2) passes.

9. The cutting device as claimed in one of claims 1 to 8, in which the speed of travel of the plate or panel (1) is between 10 mm/s and 2 m/s, particularly between 500 mm/s and 2 m/s for cutting in the thickness or between 10 mm/s and 2m/s, in particular between 10 mm/s and 250 mm/s for cutting on the edges.

10. The cutting device as claimed in one of claims 1 to 9, in which the speed of travel of the wire (2) is between 10 mm/s and 2 m/s, in particular between 10 mm/s and 250 mm/s for cutting on the edges.

11. The cutting device as claimed in one of claims 1 to 8, installed on the production line that produces the plate or panel of construction material, in which the speed of travel of the plate or of the panel (1) is at least 15 m/min, preferably at least 30 m/min, it being possible for the cut to be made in the thickness or on the edges.

12. A method for cutting a plate or panel (1) of porous construction material, comprising the following steps:
- supply of a plate or panel (1) of porous construction material,
- movement of the plate or panel (1) in a direction (X) by movement means (3, 4) that comprise at least one conveyor,
- cutting of the plate or panel (1) by a wire (2) able to pass in a direction (Y) perpendicular to the direction (X) of travel of the plate or panel (1),
the method being **characterized in that** it further comprises a step in which holding means (5, 6, 7) take hold of the plate or panel (1), the holding means comprising a vacuum holding system designed to move simultaneously with and in the same direction as the movement means (3, 4) that move the plate or panel (1).

13. The method of cutting as claimed in claim 12, in which the cut is made by a steel wire with a diameter of between 400 µm and 2 mm, particularly between 400 µm and under 1 mm, in particular between 300 µm and 700 µm.

14. The method of cutting as claimed in claim 13, in which the wire (2) at its surface comprises abrasive particles, of a size preferably comprised between 30 and 80 µm.

15. The method of cutting as claimed in claim 14, in which the abrasive particles are made of diamond or of zirconium oxide or boron nitride.

16. The method of cutting as claimed in one of claims 12 to 15, in which the wire (2) is wound onto and unwound from two reels (8, 9) which are slaved to one another, the space between the two reels (8, 9) being greater than the dimensions of the plate or of the panel (1) that is to be cut.

17. The method of cutting as claimed in one of claims 12 to 16, in which the wire (2) passes at a linear speed of between 10 m/s and 20 m/s.

18. The method of cutting as claimed in one of claims 12 to 17, in which the tension in the wire (2) is set to a value of between 150 N and 500 N.

19. The method of cutting as claimed in one of claims 12 to 18, in which the plate or panel (1) moves at a speed of between 10 mm/s and 2 m/s, in particular between 500 mm/s and 2 m/s for cutting in the thickness, or between 10 mm/s and 2 m/s, in particular between 10 mm/s and 250 mm/s for cutting on the edges.

20. The method of cutting as claimed in one of claims 12 to 19, in which, during the step of cutting the plate or panel, the wire (2) is able to move in a direction (Y) perpendicular both to the direction (X) of travel of the plate or panel (1) and to the direction (Y) in which the wire (2) passes, so as to make a cut in two mutually perpendicular directions.

21. The method of cutting as claimed in claim 20, in which the wire (2) moves at a speed of between 10 mm/s and 2 m/s, in particular between 10 mm/s and 250 mm/s for cutting on the edges.

22. The method of cutting as claimed in one of claims 12 to 20, in which the cutting step is performed on the production line that produces the plate or panel of construction material, in which the speed of travel of the plate or panel (1) is at least 15 m/min, preferably at least 30 m/min, it being possible for cutting to be performed in the thickness or on the edges.
